# FASCICULE DE BREVET EUROPEEN

(11) **EP 3 746 342 B1**
(45) Date de publication et mention de la délivrance du brevet: **03.05.2023**
(21) Numéro de dépôt: 19703153.7
(22) Date de dépôt: 07.01.2019
(51) Int. Cl.: B60W 10/08, B60W 10/26, B60W 20/13, B60W 10/30, B60K 1/02, B60K 6/442, B60K 6/52

(54) **SYSTÈME ET PROCÉDÉ DE PILOTAGE DE L'ÉNERGIE FOURNIE AU CIRCUIT ÉLECTRIQUE D'UN VÉHICULE HYBRIDE, ET VÉHICULE AUTOMOBILE LES INCORPORANT**
SYSTEM UND VERFAHREN ZUR STEUERUNG DER DEM STROMKREIS EINES HYBRIDFAHRZEUGS ZUGEFÜHRTEN ENERGIE UND KRAFTFAHRZEUG DAMIT
SYSTEM AND METHOD FOR CONTROLLING THE ENERGY SUPPLIED TO THE ELECTRIC CIRCUIT OF A HYBRID VEHICLE, AND MOTOR VEHICLE INCORPORATING SAME

(30) Priorité: 30.01.2018 FR 1850739
(43) Date de publication de la demande: 09.12.2020
(73) Titulaire: PSA Automobiles SA, 78300 Poissy (FR)
(72) Inventeur: MILHAU, Yohan, 78630 ORGEVAL (FR); DUBILLARD, Frederic, 78600 Maisons Laffitte (FR); COZ, Emmanuel, 92190 Meudon (FR); ROCQ, Gaetan, 78125 La Boissiere Ecole (FR)
(86) Numéro de dépôt international: PCT/FR2019/050025
(87) Numéro de publication internationale: WO 2019/150010

(56) Documents cités:
- DE-A1-102006 013 502
- FR-A1- 3 015 411
- FR-A1- 3 050 708

## Description

L'invention a pour objet un système de pilotage de l'énergie fournie au circuit électrique d'un véhicule à motorisation hybride. Plus particulièrement, l'invention entend proposer une solution pour gérer de façon optimum les besoins en énergie électrique du circuit électrique alimentant les différents organes fonctionnels du véhicule hybride, à savoir d'une part les consommateurs et les circuits.

A titre d'exemples non exhaustif, on peut citer en tant que consommateurs, la climatisation, le démarreur, les bougies de préchauffage, la bobine d'allumage, les injecteurs, les systèmes d'éclairage et de feux, les essuie-glaces, la lunette de dégivrage, les lèves vitres, le verrouillage des portes.

A titre d'exemples non exhaustif, on peut citer en tant que circuits, le circuit de démarrage, le circuit de préchauffage, le circuit de gestion moteur (allumage, injection), le circuit d'éclairage, le circuit de signalisation, le circuit de confort et d'accessoires et le circuit de sécurité.

Dans la suite, l'invention est présentée en lien avec l'une de ces applications, plus précisément une application à un véhicule automobile à hybridation électrique, c'est-à-dire comportant un moteur thermique et au moins un moteur électrique associés à des moyens de stockage d'énergie.

Toutefois, il doit être noté que la présente invention n'est pas limitée à l'utilisation d'une machine électrique dans un véhicule hybride, le véhicule pouvant par exemple comporter une chaîne de transmission comprenant au moins un moteur thermique et au moins une machine (ou moteur) hydraulique ou encore à air comprimé.

La machine électrique peut fonctionner comme un moteur électrique lorsque celle-ci dispose d'une source d'énergie suffisante permettant de l'alimenter et peut également fonctionner comme un générateur d'énergie électrique lorsque que celui-ci est entrainé, généralement par le moteur thermique, pour fournir de l'énergie, via un stockeur d'énergie, à divers équipements embarqués du véhicule, notamment ceux énumérés précédem ment.

Classiquement, on incorpore à l'architecture hybride un alterno-démarreur qui vient prélever une énergie ou un couple au moteur thermique pour alimenter le circuit électrique mentionné précédemment.

Lorsque le moteur électrique fournit du couple en addition au couple du moteur thermique, alors le véhicule peut disposer de plusieurs modes de roulage, par exemple un mode de roulage économe en consommation de carburant, un mode de roulage dit sportif pour fournir une puissance élevée en cas de demande du conducteur, mais cela se fait au détriment de la consommation, et un mode de roulage avec les quatre roues motrices pour maximiser la tenue de route. Quel que soit le mode de roulage, il est alors nécessaire de coupler le moteur électrique avec un accumulateur d'énergie électrique de grande capacité (stockeur d'énergie) pour disposer d'une autonomie d'énergie suffisante et d'une puissance électrique pour ce type de véhicule.

Or, outre la puissance électrique que doit fournir la machine électrique, le circuit électrique présente des besoins importants et sans cesse croissant du fait du remplacement de pièces mécaniques par des organes électriques ou commandés électriquement.

C'est pourquoi, le stockeur d'énergie et l'alterno-démarreur sont mis à contribution pour répondre à la demande de couple de la machine (moteur) électrique et aux besoins du circuit électrique.

Néanmoins, il est devenu complexe pour un véhicule hybride de satisfaire les besoins en énergie à la fois de la machine électrique en réponse à la demande de puissance motrice instantanée de la part du conducteur en fonction des différents modes de conduite possibles/souhaités et le circuit électrique du véhicule alimentant l'ensemble des organes fonctionnels électriques/électroniques.

On connaît le brevet FR 2824514 qui décrit l'utilisation des différents moteurs électriques, alternateur et machine électrique de traction, pour assurer le besoin énergétique du véhicule. Cette solution n'est pas totalement satisfaisante.

On connait en outre des brevets FR-A1-3015411 et DE-A1-102006013502 un système conforme au préambule de la revendication 1.

Ainsi, il n'existe pas à l'heure actuelle de système de pilotage de l'énergie nécessaire au circuit électrique d'un véhicule hybride permettant d'assurer le bon fonctionnant de l'ensemble des organes électriques/électroniques du véhicule hybride tout en gérant de façon optimum à la fois la charge du stockeur d'énergie (de la source motrice hybride, en l'espèce une batterie d'accumulation ou un bloc batterie) et les couples moteur thermique et électrique (autre source motrice) au regard d'une part de la demande de puissance motrice instantanée de la part du conducteur et d'un mode de conduite ainsi que d'autre part d'une utilisation optimisée du couple électrique vis-à-vis du couple moteur (thermique) afin de réduire au maximum l'utilisation de carburant fossile.

Dans ce but, la présente invention a notamment pour but de répondre aux lacunes de la technique antérieure et propose un système de pilotage d'une énergie fournie à un circuit électrique de véhicule à motorisation hybride, comportant :
- un moteur thermique ;
- un circuit électrique alimentant les différents organes fonctionnels du véhicule ;
- un alterno-démarreur relié au moteur thermique pour y prélever une énergie afin d'alimenter ledit circuit électrique ;
- au moins une autre source motrice comportant un stockeur d'énergie, ladite autre source motrice présentant deux modes d'actionnement, un mode moteur dans lequel elle fournit de l'énergie de manière à délivrer un couple de traction ou d'assistance au moteur thermique et un mode génératrice dans lequel elle stocke de l'énergie, via ledit stockeur d'énergie, en vue de fournir ledit couple de traction ou d'assistance et/ou d'alimenter ledit circuit électrique ;
   le moteur thermique, l'alterno-démarreur et l'autre source motrice fournissant respectivement un couple moteur thermique, un couple (Cₐₗₜ) de l'alterno-démarreur (30) et un couple de traction ou d'assistance destinés à répondre à une demande de puissance motrice instantanée de la part du conducteur,
- un moyen d'analyse et de commande apte notamment à déterminer les couples de l'alterno-démarreur, du moteur thermique et de l'autre source motrice,
un seuil de couple prioritaire Cₚᵣᵢₒ est prédéfini dans le moyen d'analyse et de commande et, lorsque le moyen d'analyse et de commande détermine que le couple Cₐₗₜ de l'alterno-démarreur est inférieur, en valeur absolue, au couple prioritaire Cₚᵣᵢₒ d'un couple de recharge, le moyen d'analyse et de commande impose à ladite autre source motrice de fonctionner en mode génératrice de manière à fournir un couple au moins égal au couple de recharge pour le stockeur d'énergie.

Autrement dit, dans une telle situation où Cₐₗₜ est inférieur à Cₚᵣᵢₒ, l'autre source motrice (hybride) fonctionne en mode génératrice jusqu'à ce que son niveau de charge (c'est-à-dire du stockeur d'énergie) augmente au moins de la valeur du couple de recharge ΔC.

Grâce à l'invention, il est dorénavant possible de réaliser une stratégie transversale applicable à tout type de véhicules hybrides, quelque soit le type d'hybridation ou d'architecture, le bilan en énergie (électrique) qui est apportée au circuit électrique prend en compte d'une part l'apport en énergie fournie par l'alterno-démarreur et le niveau de charge du stockeur d'énergie. Le niveau d'énergie du stockeur d'énergie est variable et son niveau augmente dès que la source motrice hybride fonctionne en mode génératrice alors que le couple prélevé par l'alterno-démarreur est soit constant soit indéterminé/variable.

Ainsi, le système selon l'invention permet d'assurer un niveau d'énergie minimal dans le stockeur d'énergie, allant jusqu'à brider la demande de puissance motrice instantanée de la part du conducteur, si cela est nécessaire, et si ce niveau d'énergie minimal est respectée, on laisse un maximum de puissance hybride disponible au conducteur (c'est-à-dire à la demande de puissance motrice instantanée de la part du conducteur).

Le système selon l'invention permet l'alimentation des auxiliaires, à savoir via le circuit électrique assurant l'apport en énergie (électrique) à différents organes fonctionnels du véhicule, à savoir d'une part les consommateurs et les circuits qui ont été présentés précédemment.

Grâce à l'invention, on dispose d'un système robuste en cas de forte consommation ou de surconsommation électrique desdits organes fonctionnels.

Enfin, selon un aspect particulièrement avantageux de l'invention, le système permet la maitrise du couple prélevé au moteur thermique en cas d'utilisation d'un alterno-démarreur dont le prélèvement de couple est fonction de la consommation du circuit annexe, autrement dit la consommation par les composants électriques/électroniques présents dans le circuit annexe.

On entend par le terme « alterno-démarreur » un élément regroupant les fonctions d'alternateur et de démarreur. Il peut agir comme générateur et comme récepteur d'énergie électrique.

On entend par l'expression « mode génératrice » relativement à l'autre source motrice le fait que cette dernière, classiquement reliée au moteur thermique, prélève de l'énergie à ce dernier, par exemple à l'instar d'un alternateur.

On entend par l'expression « demande de puissance motrice instantanée de la part du conducteur », la volonté du conducteur d'accélérer ou de freiner le déplacement du véhicule. Cette demande de puissance motrice instantanée de la part du conducteur s'exprime en puissance (Watt, noté de façon abrégé W), mais à une vitesse et une masse donnée du véhicule s'exprime de façon équivalente en couple (Newton mètre, noté de façon abrégé Nm), en accélération (en mètre par seconde au carré, soit m.s⁻²) et dépend principalement, par exemple, des positions d'une pédale d'accélération et d'une pédale de frein, de l'état d'un levier de vitesse d'une boîte de vitesses, du mode de conduite sélectionné, de la vitesse du véhicule et/ou des aides à la conduite.

On entend par l'expression « moyen d'analyse et de commande » un système embarqué équipant à l'heure actuelle les véhicules, notamment ceux du type à motorisation hybride, et qui a pour fonction d'analyser, contrôler (notamment via des capteurs) et commander les différents organes fonctionnels d'un véhicule. Ce moyen d'analyse et de commande comprend bien entendu des moyens d'enregistrement ou de mémorisation de données (mesures, entrées manuelles etc...). Un tel moyen est bien connu de l'homme du métier. On notera que, de façon classique, le moyen d'analyse et de commande est relié à l'ensemble des capteurs du véhicule, ce qui lui permet de mesurer des paramètres extérieurs ou encore des caractéristiques propres au véhicule telles que le niveau de charge du bloc batterie (stockeur d'énergie). Ces capteurs sont ainsi considérés comme partie intégrante du moyen d'analyse et de commande du système selon l'invention.

On entend par l'expression « valeur absolue » le fait par exemple que les valeurs -50 Nm et (+)50 Nm présente, en valeur absolue, une même valeur de 50 Nm.

Avantageusement, lorsque le moyen d'analyse et de commande détermine que le couple Cₐₗₜ de l'alterno-démarreur est supérieur en valeur absolue au couple prioritaire Cₚᵣᵢₒ, le moyen d'analyse et de commande interdit au stockeur d'énergie de fournir de l'énergie audit circuit électrique.

En effet, dans cette situation, le niveau de prélèvement de l'alterno-démarreur est relativement important de sorte qu'il peut alimenter, sans nécessiter d'apport d'énergie de la part du stockeur d'énergie, le circuit électrique et satisfaire les besoins des organes fonctionnels (consommateurs et circuits).

Ainsi, dans cette situation, l'énergie fournie au circuit électrique provient uniquement de l'alterno-démarreur.

De préférence, la fourniture de l'énergie par le stockeur d'énergie au circuit électrique s'effectue par l'intermédiaire d'une batterie.

Avantageusement, le seuil de couple prioritaire Cₚᵣᵢₒ présente un hystérésis destiné à confirmer la détermination, par le moyen d'analyse et de commande, d'un niveau de charge du stockeur d'énergie.

Ici, grâce à cet hystérésis introduit dans le système selon l'invention, on évite des oscillations acoustiques et vibratoires du système hybride, en particulier lorsqu'il consiste en une machine électrique, suite à des charges et arrêts de ces charges lorsque le niveau de charge du stockeur d'énergie est proche de son point de fonctionnement cible.

De préférence, cet hystérésis présente une majoration et minoration d'au plus 5% de la valeur respective du seuil Cₚᵣᵢₒ.

De préférence, l'autre source motrice consiste en au moins un moteur électrique (également dénommé machine électrique) et le stockeur d'énergie en au moins une batterie.

Dans le même but, la présente invention propose également un véhicule automobile hybride comportant au moins un système de pilotage tel que succinctement décrit ci-dessus.

Toujours dans le même but, la présente invention propose un procédé de pilotage d'une énergie fournie à un circuit électrique de véhicule à motorisation hybride, dans lequel :
- un alterno-démarreur est relié à un moteur thermique pour y prélever de l'énergie afin d'alimenter un circuit électrique, et
- une autre source motrice, comportant un stockeur d'énergie, présente deux modes d'actionnement, un mode moteur dans lequel elle fournit de l'énergie de manière à délivrer un couple de traction ou d'assistance au moteur thermique et un mode génératrice dans lequel elle stocke de l'énergie, via ledit stockeur d'énergie, en vue de fournir ledit couple de traction ou d'assistance et/ou d'alimenter le circuit électrique,
le moteur thermique, l'alterno-démarreur et l'autre source motrice fournissant respectivement un couple de l'alterno-démarreur Cₐₗₜ, un couple moteur thermique Cₘₒₜ et un couple de traction ou d'assistance C_{hyb} destinés à répondre à une demande de puissance motrice instantanée de la part du conducteur,
on prédéfinit un seuil de couple prioritaire Cₚᵣᵢₒ et, lorsqu'on détermine qu'un couple de l'alterno-démarreur Cₐₗₜ est inférieure en valeur absolue au couple prioritaire Cₚᵣᵢₒ d'une valeur ΔC, on impose à ladite autre source motrice de fonctionner en mode génératrice de manière à fournir un couple au moins égal à ΔC au stockeur d'énergie.

Les avantages du procédé et du véhicule automobile hybride conformes à l'invention étant similaires à ceux du système de pilotage d'une énergie fournie à un circuit électrique de véhicule à motorisation hybride énumérés plus haut, ils ne sont pas répétés ici.

D'autres aspects et avantages de l'invention apparaîtront à la lecture de la description qui suit d'un mode particulier de réalisation, donné à titre d'exemple non limitatif et en référence aux dessins qui l'accompagnent, dans lesquels :
- la figure 1 est un schéma d'un véhicule hybride selon un mode de réalisation du système selon l'invention ;
- la figure 2 illustre schématiquement la variation d'un couple de l'alterno-démarreur en fonction du temps ;
- la figure 3 est un organigramme illustrant le principe du système et du procédé selon un mode de réalisation de l'invention.

A nouveau, il est rappelé que l'invention est illustrée ici dans un exemple avec un véhicule hybride électrique mais la machine électrique peut être remplacée par exemple par une technologie pneumatique ou hydraulique, de préférence hydraulique.

Par ailleurs, il doit être noté que la présente invention n'entend modifier aucune pièce ou éléments physiques utilisés classiquement pour un véhicule à motorisation hybride. En outre, l'invention ne prévoit aucune modification, ajout ou suppression, au niveau de la structure du véhicule, plus précisément au niveau de la source motrice hybride ou du stockeur d'énergie.

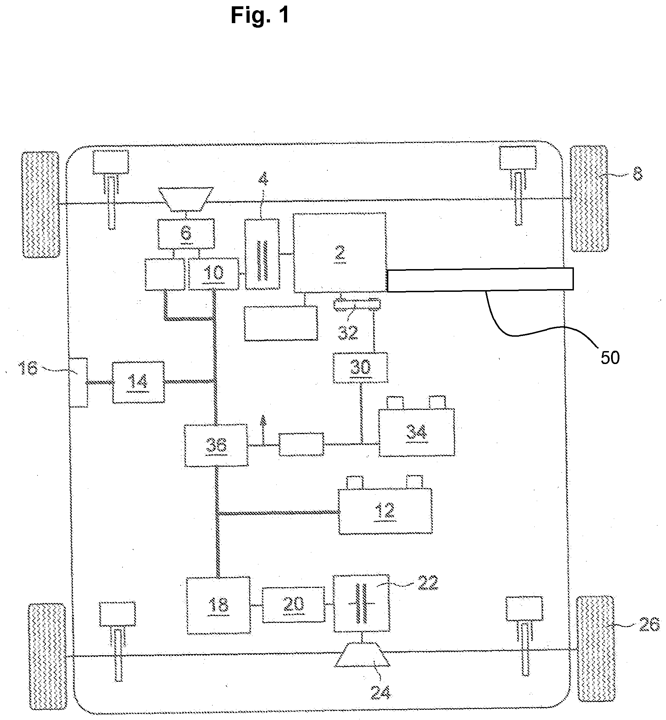

La figure 1 présente un véhicule automobile, pouvant servir à illustrer l'invention, comprenant par exemple les équipements et organes suivants.

Cette figure présente un véhicule hybride comportant un moteur thermique 2 entraînant par un embrayage 4 piloté de manière automatique, une transmission 6 présentant différents rapports de vitesse, reliée aux roues avant motrices 8 de ce véhicule.

Une ligne d'échappement 50 traite les gaz d'échappement, dont notamment les imbrulés, provenant de la chambre de combustion du moteur thermique 2, par exemple à l'aide d'un catalyseur et d'un filtre à particules, non représentés sur les figures annexées.

L'arbre d'entrée de la transmission 6 recevant le mouvement de l'embrayage 4, comporte une machine électrique avant de traction 10 alimentée par une batterie basse tension de traction 12. De cette manière la machine électrique avant 10 peut délivrer un couple sur les roues motrices 8 sans passer par l'embrayage 4, en utilisant les différents rapports de vitesse proposés par la transmission 6.

Un chargeur embarqué 14 peut être relié par une prise extérieure 16 à un réseau de distribution d'électricité, pour recharger la batterie de traction 12 quand le véhicule est à l'arrêt. La batterie de traction 12 présente une basse tension, qui peut être par exemple de 220 ou 300 Volts (V).

La batterie de traction 12 alimente aussi une machine électrique arrière de traction 18 reliée successivement par un réducteur 20 et un système de crabotage 22, à un différentiel arrière 24 répartissant le mouvement vers les roues arrière du véhicule 26.

Un alternateur, également désigné alterno-démarreur, 30 relié en permanence par une courroie 32 au moteur thermique 2, alimente un réseau de bord 34 comportant une batterie très basse tension. En complément la batterie du réseau de bord 34 peut être chargée par un convertisseur de tension continue DC/DC 36, recevant une énergie électrique de la batterie de traction 12, ou d'une machine électrique avant 10 ou arrière 18 si le niveau d'énergie de cette batterie de traction est insuffisant.

Lors des freinages du véhicule ou d'un relâchement de la pédale d'accélérateur, les machines électriques 10, 18 travaillent en génératrice en délivrant un couple de freinage, pour recharger la batterie de traction 12 et récupérer une énergie.

Un moyen d'analyse et de commande, non représenté sur les figures annexées, contrôle le fonctionnement de ce groupe motopropulseur pour répondre aux demandes du conducteur tout en optimisant les consommations d'énergie et les émissions de gaz polluants selon des stratégies classiques.

Dans cet exemple d'exécution, la batterie de traction 12 constitue le stockeur d'énergie selon l'invention, l'alternateur 30 constitue l'alterno-démarreur selon l'invention tandis que l'ensemble formé par la machine électrique avant de traction 10 et la machine électrique arrière de traction 18 constitue l'autre source motrice (hybride) selon l'invention.

La présente invention propose une solution pour la gestion de l'énergie électrique d'un véhicule hybride équipé de deux réseaux de tension distincts, à savoir celui de l'alterno-démarreur 30 et celui du stockeur d'énergie 12 (plus généralement l'ensemble source motrice et stockeur d'énergie). Ceci permet donc de minimiser la consommation d'énergie fossile tout en gardant la maitrise des émissions de gaz polluant.

L'invention prévoit au moins une cible de recharge, en l'espèce le seuil Cₚᵣᵢₒ, dont le niveau d'énergie ou de couple est réparti entre l'alterno-démarreur 30 et le stockeur d'énergie 12 dans le cas où le niveau du couple Cₐₗₜ (de l'alterno-démarreur) est inférieur à ce seuil Cₚᵣᵢₒ. Dans l'hypothèse où le couple Cₐₗₜ est au moins égal à ce seuil Cₚᵣᵢₒ, on ne considère pas l'énergie ou le couple prélevé par l'alterno-démarreur mais on prévoit toutefois que le stockeur d'énergie 12 n'alimente plus le circuit électrique car l'alterno-démarreur 30 est en mesure de fournir seul l'énergie électrique que requiert ledit circuit.

L'alterno-démarreur ou l'alternateur 30 prélève directement de l'énergie au moteur thermique 2, en contrepartie, cette énergie alimentant le réseau Très Basse Tension (TBT), ce même niveau d'énergie ne sera plus prélevé par le convertisseur de tension continue DC/DC 36 relié à la batterie de traction 12.

L'invention consiste donc, selon un aspect, à proposer une adaptation des consignes électriques nominales en cas de fonctionnement de l'alterno-démarreur 30, quelque soit l'état (c'est-à-dire le couple de prélèvement au moteur thermique) de ce dernier. Ainsi, selon un aspect principal de l'invention, on considère que le couple prélevé par l'alterno-démarreur 30 au moteur thermique 2 correspond à une partie du couple prioritaire Cₚᵣᵢₒ qui, en l'absence de cet alterno-démarreur 30, est considéré uniquement au regard de la charge du stockeur d'énergie 12. Autrement dit, une fois défini un seuil de couple prioritaire Cₚᵣᵢₒ, on peut décider, au regard du couple Cₐₗₜ de l'alterno-démarreur 30, si on doit imposer ou non le mode génératrice à la source hybride (autre source motrice). Si le couple Cₐₗₜ de l'alterno-démarreur 30 est inférieur au couple Cₚᵣᵢₒ, l'alterno-démarreur 30 peut ne pas être en mesure de fournir une quantité d'énergie suffisante pour le circuit électrique, c'est pourquoi on impose à la source hybride d'être en mode génératrice afin que le stockeur d'énergie 12 récupère un couple égal à la différence entre le couple de l'alterno-démarreur Cₐₗₜ et le couple prioritaire Cₚᵣᵢₒ, soit une valeur différentielle ΔC, afin que le stockeur d'énergie 12 puisse notamment fournir de l'énergie électrique au circuit électrique, classiquement via une batterie, sans trop se décharger.

L'invention part du principe que le couple Cₐₗₜ prélevé par l'alterno-démarreur 30 au moteur thermique correspond à une partie du couple prioritaire Cₚᵣᵢₒ. La puissance prélevée pour le réseau de bord est considérée comme non délestable et sera retranchée à cette puissance prioritaire et on applique ce raisonnement avec les couples.

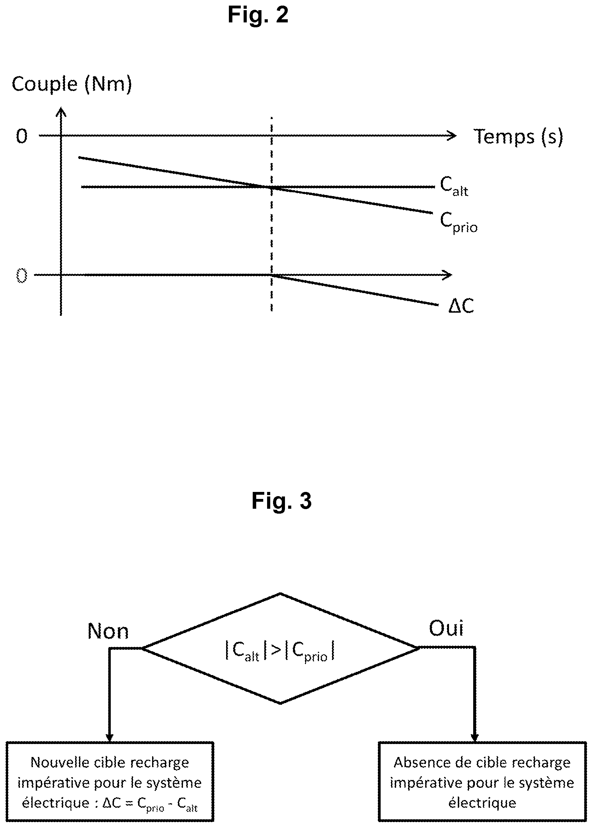

La figure 2 illustre schématiquement cette règle.

Le couple Cₐₗₜ, mesuré ou estimé, s'exprime en Newton Mètre (Nm) et peut prendre en compte des rendements électriques ainsi que par exemple des rendements de transmission. Avantageusement, ce rejet ne peut excéder le couple prioritaire Cₚᵣᵢₒ, ainsi si l'alterno-démarreur 30 prélève trop de couple au moteur thermique 2, la machine électrique 10, 18 n'assistera pas le moteur thermique 2. La courbe sur la figure 2 donne un exemple de coordination.

Si l'on considère des exemples numériques, on pourra illustrer l'invention selon les deux exemples ci-dessous :
Le couple prioritaire Cₚᵣᵢₒ étant égal à -15 Nm (Newton mètre) et le couple Cₐₗₜ de l'alterno-démarreur 30 étant égal à -10 Nm, on obtient une valeur de ΔC égale à -5 Nm. Cet exemple illustre le cas dans lequel le couple Cₐₗₜ de l'alterno-démarreur 30 est inférieur en valeur absolue au couple prioritaire.

Le couple prioritaire Cₚᵣᵢₒ étant cette fois égal à -5 Nm et le couple Cₐₗₜ de l'alterno-démarreur 30 étant égal à -10 Nm, on obtient une valeur de ΔC égale à 0 Nm. Cet exemple illustre le cas dans lequel le couple Cₐₗₜ de l'alterno-démarreur 30 est supérieur en valeur absolue au couple prioritaire Cₚᵣᵢₒ : dans ce cas, le ΔC n'est pas égale à +5 Nm mais on le fixe égal à 0 car le moyen d'analyse et de commande interdit au stockeur d'énergie 12 de fournir de l'énergie au circuit électrique.

La figure 3 illustre le principe de l'invention de façon schématique. Ainsi, le moyen d'analyse et de commande compare le couple Cₐₗₜ de l'alterno-démarreur 30 et le couple prioritaire Cₚᵣᵢₒ, plus précisément la valeur absolue de ces deux couples Cₐₗₜ et Cₚᵣᵢₒ.

Si le couple Cₐₗₜ de l'alterno-démarreur 30 est supérieur au couple prioritaire Cₚᵣᵢₒ, le moyen d'analyse et de commande interdit au stockeur d'énergie 12 de fournir de l'énergie au circuit électrique, autrement dit il n'y plus de cible de recharge à atteindre pour le stockeur d'énergie 12.

Si le couple Cₐₗₜ de l'alterno-démarreur 30 est inférieur au couple prioritaire Cₚᵣᵢₒ, le moyen d'analyse et de commande impose à l'autre source motrice 10, 18 de fonctionner en mode génératrice de telle sorte que le stockeur d'énergie 12 soit rechargé en énergie au moins de la valeur de la différence ΔC entre ces deux couples Cₐₗₜ et Cₚᵣᵢₒ.

## Revendications

1. Système de pilotage d'une énergie fournie à un circuit électrique de véhicule à motorisation hybride, comportant :
- un moteur thermique ;
- un circuit électrique alimentant les différents organes fonctionnels du véhicule ;
- un alterno-démarreur (30) relié au moteur thermique pour y prélever une énergie afin d'alimenter ledit circuit électrique ;
- au moins une autre source motrice (10, 18) comportant un stockeur d'énergie (12), ladite autre source motrice (10, 18) présentant deux modes d'actionnement, un mode moteur dans lequel elle fournit de l'énergie de manière à délivrer un couple de traction ou d'assistance au moteur thermique et un mode génératrice dans lequel elle stocke de l'énergie, via ledit stockeur d'énergie (12), en vue de fournir ledit couple de traction ou d'assistance et/ou d'alimenter ledit circuit électrique ;
le moteur thermique, l'alterno-démarreur (30) et l'autre source motrice (10, 18) fournissant respectivement un couple moteur thermique, un couple (Cₐₗₜ) de l'alterno-démarreur (30), et un couple de traction ou d'assistance destinés à répondre à une demande de puissance motrice instantanée de la part du conducteur,
- un moyen d'analyse et de commande apte notamment à déterminer les couples de l'alterno-démarreur (30), du moteur thermique (2) et de l'autre source motrice (10, 18),
**caractérisé en ce qu'**un seuil de couple prioritaire (Cₚᵣᵢₒ) est prédéfini dans le moyen d'analyse et de commande et **en ce que**, lorsque le moyen d'analyse et de commande détermine que le couple (Cₐₗₜ) de l'alterno-démarreur (30) est inférieur, en valeur absolue, au couple prioritaire (Cₚᵣᵢₒ) d'un couple de recharge (ΔC), le moyen d'analyse et de commande impose à ladite autre source motrice (10, 18) de fonctionner en mode génératrice de manière à fournir un couple au moins égal au couple de recharge (ΔC) pour le stockeur d'énergie (12).

2. Système selon la revendication 1, **caractérisé en ce que**, lorsque le moyen d'analyse et de commande détermine que le couple (Cₐₗₜ) de l'alterno-démarreur (30) est supérieur en valeur absolue au couple prioritaire (Cₚᵣᵢₒ), le moyen d'analyse et de commande interdit au stockeur d'énergie (12) de fournir de l'énergie audit circuit électrique.

3. Système selon la revendication 2, **caractérisé en ce que** l'énergie fournie au circuit électrique provient uniquement de l'alterno-démarreur (30).

4. Système selon la revendication 1, **caractérisé en ce que** la fourniture de l'énergie par le stockeur d'énergie (12) audit circuit électrique s'effectue par l'intermédiaire d'une batterie (34).

5. Système selon l'une quelconque des revendications précédentes, **caractérisé en ce que** le seuil de couple prioritaire (Cₚᵣᵢₒ) présente un hystérésis destiné à confirmer la détermination, par le moyen d'analyse et de commande, d'un niveau de charge du stockeur d'énergie (12).

6. Système selon l'une quelconque des revendications précédentes, **caractérisé en ce que** l'autre source motrice (10, 18) consiste en au moins un moteur électrique et le stockeur d'énergie (12) en au moins une batterie.

7. Véhicule automobile hybride, **caractérisé en ce qu'**il comporte au moins un système de pilotage selon l'une quelconque des revendications précédentes.

8. Procédé de pilotage d'une énergie fournie à un circuit électrique de véhicule à motorisation hybride, dans lequel :
- un alterno-démarreur (30) est relié à un moteur thermique pour y prélever de l'énergie afin d'alimenter un circuit électrique, et
- une autre source motrice (10, 18), comportant un stockeur d'énergie (12), présente deux modes d'actionnement, un mode moteur dans lequel elle fournit de l'énergie de manière à délivrer un couple de traction ou d'assistance au moteur thermique et un mode génératrice dans lequel elle stocke de l'énergie, via ledit stockeur d'énergie (12), en vue de fournir ledit couple de traction ou d'assistance et/ou d'alimenter le circuit électrique,
le moteur thermique, l'alterno-démarreur (30) et l'autre source motrice (10, 18) fournissant respectivement un couple (Cₐₗₜ) de l'alterno-démarreur (30), un couple moteur thermique et un couple de traction ou d'assistance destinés à répondre à une demande de puissance motrice instantanée de la part du conducteur,
**caractérisé en ce qu'**on prédéfinit un seuil de couple prioritaire (Cₚᵣᵢₒ) et **en ce que**, lorsqu'on détermine qu'un couple (Cₐₗₜ) de l'alterno-démarreur (30) est inférieur, en valeur absolue, au couple prioritaire (Cₚᵣᵢₒ) d'un couple de recharge (ΔC), on impose à ladite autre source motrice (10, 18) de fonctionner en mode génératrice de manière à fournir un couple au moins égal au couple de recharge (ΔC) pour le stockeur d'énergie (12).

## Patentansprüche

1. System zum Steuern einer Energie, die einem Stromkreis eines Fahrzeugs mit Hybridmotor zugeführt wird, umfassend:
- eine Wärmekraftmaschine;
- ein Stromkreis, der die verschiedenen Funktionsorgane versorgt
des Fahrzeugs;
- einen Generator-Starter (30), der mit der Wärmekraftmaschine verbunden ist Entnehmen von Energie, um den Stromkreis zu versorgen;
- mindestens eine andere Antriebsquelle (10, 18), umfassend a
Energiespeicher (12), wobei die andere Antriebsquelle (10, 18) zwei Betätigungsmodi aufweist, einen Antriebsmodus, in dem sie Energie liefert, um ein Traktions- oder Unterstützungsmoment an die Wärmekraftmaschine zu liefern, und einen Generatormodus, in dem sie speichert Energie über den Energiespeicher (12) zur Bereitstellung des Traktions- oder Unterstützungsdrehmoments und/oder zur Versorgung des Stromkreises;
die Wärmekraftmaschine, der Wechselstromgenerator-Starter (30) und die andere Antriebsquelle (10, 18) jeweils ein Wärmekraftmaschinendrehmoment, ein Drehmoment (Cait) des Wechselstromgenerator-Starters (30) und ein Traktionsdrehmoment oder eine dazu vorgesehene Unterstützung liefern auf eine sofortige Antriebsleistungsanforderung des Fahrers zu reagieren,
- ein Analyse- und Kontrollmittel, das insbesondere geeignet ist
Bestimmen Sie die Drehmomente des Generator-Starters (30), des Motors thermisch (2) und die andere Antriebsquelle (10, 18),
**dadurch gekennzeichnet, dass** ein vorrangiger Drehmomentschwellenwert (Cprio) in den Analyse- und Steuermitteln vordefiniert ist und dass, wenn die Analyse- und Steuermittel bestimmen, dass das Drehmoment (Cait) des Wechselstromgenerator-Starters (30) im absoluten Wert niedriger ist, als das Prioritätsdrehmoment (Cprio) durch ein Wiederaufladedrehmoment (AC) erzwingt das Analyse- und Steuermittel der anderen Antriebsquelle (10, 18), im Generatormodus zu arbeiten, um ein Drehmoment bereitzustellen, das mindestens gleich dem Wiederaufladedrehmoment ( AC) für den Energiespeicher (12).

2. System nach Anspruch 1, **dadurch gekennzeichnet, dass**, wenn die Analyse und Steuermittel bestimmen, dass das Drehmoment (CO) des Wechselstromgenerator-Starters (30) im Absolutwert größer ist als das Prioritätsdrehmoment (Cprio), die Mittel Analyse und Steuerung verbieten der Energiespeicher (12) zur Energieversorgung des elektrischen Schaltkreises.

3. System nach Anspruch 2, **dadurch gekennzeichnet, daß** die dem Stromkreis zugeführte Energie ausschließlich von der Anlasser-Wechselstrommaschine (30) stammt.

4. System nach Anspruch 1, **dadurch gekennzeichnet, dass** die Energiezufuhr des Energiespeichers (12) zu dem Stromkreis über eine Batterie (34) erfolgt.

5. System nach einem der vorangehenden Ansprüche, **dadurch gekennzeichnet, dass** die vorrangige Drehmomentschwelle (Cprio) eine Hysterese aufweist, die dazu bestimmt ist, die Bestimmung eines Lastniveaus des Energiespeichers 12) durch die Analyse und Steuermittel zu bestätigen.

6. System nach einem der vorhergehenden Ansprüche, **dadurch gekennzeichnet, dass** die andere Antriebsquelle (10, 18) aus mindestens einem Elektromotor und der Energiespeicher (12) aus mindestens einer Batterie besteht.

7. Hybridkraftfahrzeug, **dadurch gekennzeichnet, dass** es mindestens ein Steuersystem nach einem der vorhergehenden Ansprüche umfasst.

8. Verfahren zum Steuern einer einem Stromkreis eines Fahrzeugs mit Hybridmotor zugeführten Energie, bei dem :
ein Generator-Starter (30) mit einer Wärmekraftmaschine verbunden ist, um dieser Energie zu entnehmen, um einen elektrischen Stromkreis zu versorgen, und eine andere Antriebsquelle (10, 18), die einen Energiespeicher (12) umfasst, zwei Betätigungsmodi aufweist, einen Motormodus, in dem es Energie liefert, um ein Traktions- oder Unterstützungsdrehmoment an die Wärmekraftmaschine zu liefern, und einen Generatormodus, in dem es Energie über die Energiespeicherenergie (12) speichert, um das Traktions- oder Unterstützungsdrehmoment zu liefern und/oder Versorgen der elektrischen Schaltung, des Verbrennungsmotors, des Wechselstromgenerators/Starters (30) und der anderen Antriebsquelle (10, 18) jeweils mit einem Drehmoment (CAL) vom Wechselstromgenerator/Starter (30), einem Wärmekraftmaschinendrehmoment und ein Traktions- oder Unterstützungsdrehmoment, das dazu bestimmt ist, auf eine sofortige Antriebsleistungsanforderung des Fahrers zu reagieren, **dadurch gekennzeichnet, dass** ein Prioritätsdrehmomentschwellenwert (Cprio) vordefiniert ist und dass, wenn bestimmt wird, dass ein Drehmoment (Cait) des Starter-Wechselstromgenerators (30) niedriger ist, im Absolutwert, als die Drehmomentpriorität (Cprio) von ein Wiederauflademoment (AC), wobei die andere Antriebsquelle (10, 18) im Generatorbetrieb arbeiten muss, um ein Drehmoment zu liefern, das mindestens gleich dem Wiederauflademoment (AC) für die Speicherenergie (12) ist.

## Claims

1. System for controlling an energy supplied to an electrical circuit of a vehicle with hybrid motorization, comprising:
- a heat engine;
- an electrical circuit supplying the various functional organs
of the vehicle;
- an alternator-starter (30) connected to the heat engine to
extracting energy in order to supply said electric circuit;
- at least one other driving source (10, 18) comprising a
energy storer (12), said other driving source (10, 18) having two modes of actuation, a driving mode in which it supplies energy so as to deliver a traction or assistance torque to the heat engine and a generator mode in which it stores energy, via said energy storer (12), with a view to supplying said traction or assistance torque and/or supplying said electric circuit;
the heat engine, the alternator-starter (30) and the other driving source (10, 18) respectively supplying a heat engine torque, a torque (Cait) of the alternator-starter (30), and a traction torque or assistance intended to respond to an instantaneous demand for motive power from the driver,
- an analysis and control means capable in particular of
determine the torques of the alternator-starter (30), of the engine
thermal (2) and the other driving source (10, 18),
**characterized in that** a priority torque threshold (Cprio) is predefined in the analysis and control means and **in that**, when the analysis and control means determines that the torque (Cait) of the alternator- starter (30) is lower, in absolute value, than the priority torque (Cprio) by a recharging torque (AC), the analysis and control means imposes on said other driving source (10, 18) to operate in mode generator so as to provide a torque at least equal to the recharging torque (AC) for the energy storer (12).

2. System according to Claim 1, **characterized in that**, when the analysis and control means determine that the torque (CO) of the alternator-starter (30) is greater in absolute value than the priority torque (Cprio), the means analysis and control prohibits the energy storer (12) to supply energy to said electrical circuit.

3. System according to Claim 2, **characterized in that** the energy supplied to the electric circuit comes solely from the alternator-starter (30).

4. System according to Claim 1, **characterized in that** the supply of energy by the energy storer (12) to the said electrical circuit takes place via a battery (34).

5. System according to any one of the preceding claims, **characterized in that** the priority torque threshold (Cprio) has a hysteresis intended to confirm the determination, by the analysis and control means, of a load level of the storer of energy 12).

6. System according to any one of the preceding claims, **characterized in that** the other driving source (10, 18) consists of at least one electric motor and the energy store (12) of at least one battery.

7. Hybrid motor vehicle, **characterized in that** it comprises at least one control system according to any one of the preceding claims.

8. Method for controlling an energy supplied to an electrical circuit of a vehicle with hybrid motorization, in which :
an alternator-starter (30) is connected to a heat engine in order to draw energy therefrom in order to supply an electrical circuit, and another driving source (10, 18), comprising an energy storer (12), has two actuation modes, a motor mode in which it supplies energy so as to deliver a traction or assistance torque to the thermal engine and a generator mode in which it stores energy, via said energy store energy (12), with a view to supplying said traction or assistance torque and/or supplying the electric circuit, the combustion engine, the alternator-starter (30) and the other driving source (10, 18) respectively supplying a torque (CAL) from the alternator-starter (30), a heat engine torque and a traction or assistance torque intended to respond to an instantaneous motive power request from the driver,
**characterized in that** a priority torque threshold (Cprio) is predefined and **in that**, when it is determined that a torque (Cait) of the starter-alternator (30) is lower, in absolute value, than the torque priority (Cprio) of a recharging torque (AC), said other driving source (10, 18) is required to operate in generator mode so as to supply a torque at least equal to the recharging torque (AC) for the storer energy (12).
